# EUROPÄISCHE PATENTSCHRIFT

(11) **EP 1 526 353 B1**
(45) Veröffentlichungstag und Bekanntmachung des Hinweises auf die Patenterteilung: **19.09.2007**
(21) Anmeldenummer: 04023730.7
(22) Anmeldetag: 05.10.2004
(51) Int. Cl.: F41G 3/14, G01S 5/04, G01S 5/20, G01S 13/04, G01S 15/04, G01S 5/00

(54) **Aufklärungssystem zur Ermittlung von Zielen und Zielbewegungen**
Reconnaissance system for detecting targets and target movements
Système de reconnaissance pour la détection de cibles et de mouvements des cibles

(30) Priorität: 25.10.2003 DE 10349838
(43) Veröffentlichungstag der Anmeldung: 27.04.2005
(73) Patentinhaber: Rheinmetall Waffe Munition GmbH, 84544 Aschau am Inn (DE)
(72) Erfinder: Knese, Gerd Christian, 29328 Fassberg (DE)
(74) Vertreter: Dietrich, Barbara

(56) Entgegenhaltungen:
- EP-A- 0 173 001
- DE-A- 4 104 800
- FR-A- 2 726 643
- US-B1- 6 380 889

## Beschreibung

Die Erfindung betrifft ein Aufklärungssystem zur Ermittlung von Zielen und Zielbewegungen, insbesondere Fahrzeugbewegungen, in einem Zielgebiet.

Das Fehlen von Informationen über Zielbewegungen in schwer erreichbaren Gebieten macht eine wirksame und punktgenaue Bekämpfung dieser Ziele häufig unmöglich.

Es ist bereits bekannt, zur Aufklärung von Zielbewegungen in einem entsprechenden Gebiet Flugkörper, z.B. Aufklärungsdrohnen, einzusetzen, die Bilder von dem zu überwachenden Gebiet aufnehmen bzw. dieses mit Radarsystemen abtasten, und die Daten an eine Bodenkontrollstation per Funk übermitteln. In der Bodenkontrollstation werden die Bilder dann mittels einer Auswerteeinrichtung mit entsprechend leistungsfähigem Rechner ausgewertet.

Nachteilig bei einem derartigen bekannten Aufklärungssystem sind allerdings unter anderem die hohen Anschaffungskosten der entsprechenden Flugkörper, zumal diese leicht von dem Gegner geortet und abgeschossen werden können. Außerdem können die Radarsysteme durch entsprechende Antiradarwaffen gestört werden. Schließlich wird bei diesen bekannten Aufklärungssystemen die Erneuerungsrate der zu ermittelnden zielrelevanten Daten durch die Flugkörperbewegung stark eingeschränkt.

Die US 6.380,889 B1 beschreibt eine Aufklärungssonde mit mehreren akustischen Sensoren sowie einem GPS-Navigationssystem, einem Magnetfeldsensor, zwei Neigesensoren und einem seismischen Sensor. Ferner befindet sich innerhalb des Gehäuses eine elektronische Auswerteeinheit. Die Aufklärungssonde arbeitet autark und ist mit Batterien ausgerüstet. Sie kann mit einem Feuerleitrechner oder direkt mit dem gelenkten Geschoss kommunizieren.

Aus der DE 41 04 800 A1 ist eine Einrichtung zur Echtzeit-Geländeaufklärung bekannt, bei dem im Sinken das Treffergebiet des nachfolgend zu verschießenden realen scharfen Projektils spiralförmig nach dem Vorhandensein und der Verteilung potentieller Zielobjekte abgesucht wird. Die Übertragung erfolgt auch hier mittels einer Nachrichtenverbindung.

Mit der FR 2 726 643 wird ein Aufklärungssystem offenbart, das aus zwei am Fallschirm hängenden Sonden besteht, wobei eine Sonde mit optischem Sucher mit der anderen Sonde kommuniziert, welche ihrerseits mit einer Basisstation nachrichtentechnisch in Verbindung steht.

Ein Aufklärungssystem mit mehreren Sonden wird in der EP 0 173 001 A2 publiziert. Die Sondengeräte weisen mindestens einen Sensor zum Erkennen von Objekten auf. Wenn ein Objekt erkannt wird, wird das Sondengerät bzw. ein Sender dieses Sondengerätes hochgeschossen, wobei dann über eine Antenne im Fluge Detektierungssignale ausgesendet werden, die von einem entfernt angeordneten Empfänger empfangen werden.

Mit der EP 0 743 535 A1 wird ein Überwachungssystem zum Überwachen von und die Möglichkeit des Handelns in einem großen geographischen Gebiet beschrieben, welches eine Vielzahl von im Überwachungsgebiet befindlichen Zellen aufweist. Dabei befindet sich au-ßerhalb des Zielgebietes ein stationäres Informationszentrum, das über eine drahtlose Verbindung mit der jeweiligen Sonde verbunden ist. Alle Zellen haben bereits bei ihrer Verlegung eine eigene Identifikationskennzeichnung und sind zu Gruppen zusammengefasst, wobei jede Gruppe von Zellen eine Gruppenidentifizierung besitzt, die in jeder Zelle gefunden werden kann und für alle Zellen, die zur selben Gruppe / System gehören, identisch ist, die Gruppierung ist vorgegeben.

Der Erfindung liegt die Aufgabe zugrunde, ein gegenüber vergleichbaren Aufklärungssysten kostengünstigeres Aufklärungssystem zur Ermittlung von Zielen und Zielbewegungen, insbesondere in einem schwer zugänglichen Zielgebiet, anzugeben.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, eine Vielzahl relativ einfach aufgebauter und daher kostengünstiger autonom arbeitender Sonden in das entsprechende Zielgebiet, z.B. mittels eines Artillerie-Trägergeschosses, zu verbringen, welche dann anschließend zielrelevante Daten sowie Positionsdaten bestimmen und an eine außerhalb des Zielgebietes anordbare stationäre Auswerteeinrichtung übermitteln, wo sie von einem leistungsfähigen Rechner ausgewertet werden.

Je nach den zu ermittelnden Zielen und der Art des Zielgebietes kann es sich bei den Sensoren um akustische Sensoren, seismische Sensoren, Magnetfeldsensoren, InfrarotSensoren und/oder Radarsysteme handeln.

Sofern es sich um Sonden handelt, welche durch Abwurf in das Zielgebiet verbringbar sind, weisen diese sowohl eine Bremsvorrichtung als auch eine Aufrichtvorrichtung auf.

Als besonders vorteilhaft hat es sich erwiesen, wenn es sich bei der Nachrichtenübermittlungseinrichtung um eine Satellitenfunkanlage handelt, da mit diesen Anlagen auch bei größeren Distanzen zwischen der Auswerteeinrichtung und den Zielgebieten auf einfache Weise die Übermittlung großer Datenmengen von den Sonden zu der Auswerteeinrichtung gewährleistet werden kann.

Bei dem Sensor zur Ermittlung der Position der jeweiligen Sonde handelt es sich zweckmäßigerweise um ein Global Position System (GPS-Sensor).

Weitere Einzelheiten und Vorteile der Erfindung ergeben sich aus den folgenden anhand von Figuren erläuterten Ausführungsbeispielen. Es zeigen:
Fig.1 die schematische Draufsicht auf ein zu überwachendes Zielgebiet mit einem erfindungsgemäßen Aufklärungssystem, welches mehrere Sonden umfaßt, und
Fig.2 den schematischen Aufbau einer Sonde des Aufklärungssystems.

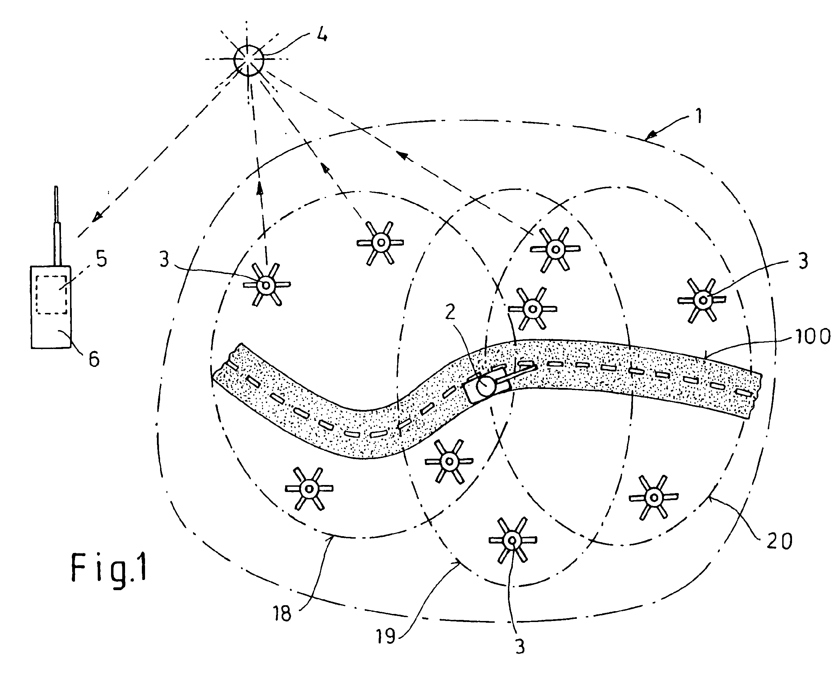

In Fig. 1 ist mit 1 ein Zielgebiet bezeichnet, durch welches ein feindlicher Panzer 2 entlang einer Straße 100 fährt, dessen Bewegungsänderungen ständig ermittelt werden sollen.

Hierzu befinden sich in dem Zielgebiet 1 eine Vielzahl von verteilt angeordneten Sonden 3 (von denen in Fig. 1 lediglich neun dargestellt sind) eines Aufklärungssystems. Die Sonden 3 stehen per Funk über einen Satelliten 4 drahtlos mit einer einen Rechner 5 umfassenden Auswerteeinrichtung 6 in Verbindung.

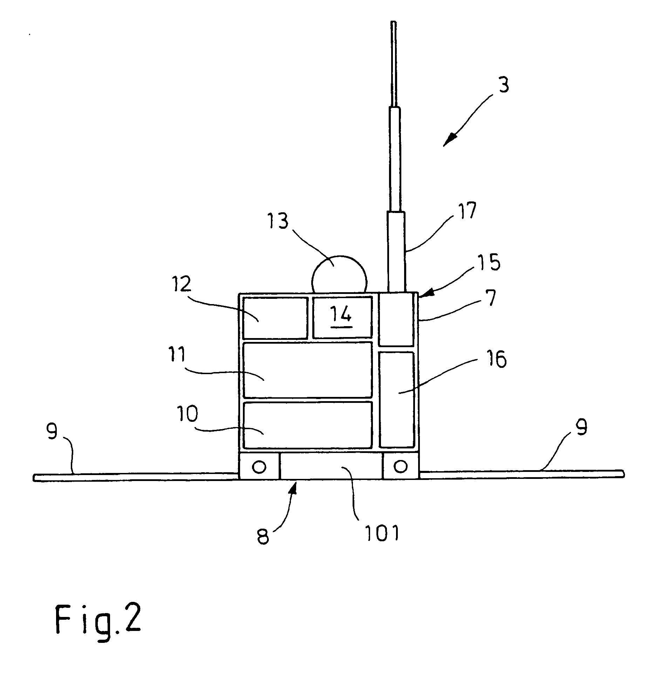

Fig.2 zeigt schematisch eine einzelne in dem Zielgebiet 1 abgesetzte Sonde 3 des erfindungsgemäßen Aufklärungssystems. Die Sonde 3 umfaßt ein Gehäuse 7, an dem sich eine nicht dargestellte Fallschirmeinrichtung befand, die kurz vor der Landung der Sonde 3 von dem Gehäuse 7 mittels eines Trennschlosses abgetrennt wurde.

An dem Gehäuse 7 ist außerdem die mechanische Aufrichtvorrichtung 8 vorgesehen, welche mehrere paddelförmige Aufrichtelemente 9 umfaßt, die nach der Landung der Sonde 3 von einer Aufrichtmechanik aufgeklappt werden und die Sonde 3 in eine vorbestimmte Ausgangsposition bringen.

Ferner befinden sich an bzw. in dem Gehäuse 7 der Sonde 3 eine Stromversorgungseinrichtung 10, eine Steuerelektronik 11, ein Sensor 12 mit Antenne zur genauen Positionsbestimmung der Sonde 3 (GPS-Sensor) sowie ein akustischer Sensor (Mikrofon) 13, welcher in seiner ausgefahrenen Position dargestellt und vor dem Aufrichten der Sonde 3 in einem entsprechenden Stauraum 14 untergebracht ist.

Zur Übermittlung der gemessenen Daten ist außerdem eine Nachrichtenübermittlungseinrichtung 15 mit einem Satellitenmodem 16 und einer teleskopartig ausschiebbaren Antenne 17 vorgesehen.

Sobald ein Cargogeschoß die jeweilige Sonde 3 in das entsprechende Zielgebiet 1 verbracht und abgeworfen hat, wird dieses durch die sich öffnende Fallschirmeinrichtung abgebremst. Nach Abtrennen der Fallschirmeinrichtung und Landung in dem vorgegebenen Zielgebiet 1 wird die Sonde 3 mittels der Aufrichtvorrichtung 8 aufgerichtet und die Antenne 17 sowie der akustische Sensor 13 herausgeschoben.

Nach einem Selbsttest der elektronischen Baueinheiten der Sonde 3 wird der akustische Sensor 13 empfangsbereit geschaltet.

Überschreitet nun das von dem akustischen Sensor 13 empfangene Signal einer Schallquelle einen bestimmten Schwellenwert oder genügt es einem anderen vorgegebenen spezifischen Kriterium, so wird von allen Sonden 3, die dieses Signal empfangen haben, ein entsprechender Signalwert in regelmäßigen zeitlichen Abständen (z.B. pro Minute während einer Zeitdauer von 10 Sekunden) zusammen mit der GPS-Position der jeweiligen Sonde 3 und einem präzisen Zeitstempel (GPS-Zeit) über den Satelliten 4 an die Auswerteeinrichtung 6 gesendet.

Aufgrund der bekannten GPS Positionen der Sonden 3 legt die Auswerteeinrichtung 6 dann zur genauen Positionsbestimmung des Panzers 2 mehrere Peilgruppen 18, 19 und 20 fest und bestimmt aus den Meßwerten der Sonden 3 die Fahrtrichtung und Geschwindigkeit des Panzers 2.

Außerdem kann in der Auswerteeinrichtung 6 eine Klassifizierung des jeweiligen Zieles 2 erfolgen. Hierzu können die von den Sonden 3 empfangenen Signale mit in einem Speicher der Auswerteeinrichtung 6 abgelegten zielcharakteristischen Sollwerten verglichen werden.

Die Erfindung ist selbstverständlich nicht auf das vorstehend beschriebene Ausführungsbeispiel beschränkt. So kann die erfindungsgemäße Sensoreinrichtung z.B. auch mittels eines fernsteuerbaren autonomen Fahrzeuges oder manuell in dem jeweiligen Zielgebiet abgesetzt werden. In diesem Fall kann die Fallschirmeinrichtung entfallen.

Ferner können die in dem Zielgebiet befindlichen Sonden auch derart angeordnet sein, daß wesentlich mehr als drei Peilgruppen gebildet werden. Insbesondere können die Peilgruppen in bezug auf unterschiedlich angeordnete Ziele auch variieren, so daß gleichzeitig auch mehrere Zielbewegungen überwacht werden können.

### Bezugszeichenliste

- 1: Zielgebiet
- 2: Ziel, Panzer
- 3: Sonde
- 4: Satellit
- 5: Rechner
- 6: Auswerteeinrichtung
- 7: Gehäuse
- 8: Aufrichtvorrichtung
- 9: Aufrichtelement
- 10: Stromversorgungseinrichtung
- 11: Steuerelektronik
- 12: Sensor, GPS-Sensor
- 13: (akustischer) Sensor
- 14: Stauraum
- 15: Nachrichtenübermittlungseinrichtung
- 16: Satellitenmodem
- 17: Antenne
- 18-20: Peilgruppen

- 100: Straße
- 101: Aufrichtmechanik

## Patentansprüche

1. Aufklärungssystem zur Ermittlung von Zielen (2) und Zielbewegungen, insbesondere Fahrzeugbewegungen, in einem Zielgebiet (1), aufweisend eine Vielzahl von in das entsprechende Zielgebiet (1) verbringbaren und dort verteilt anordbaren autonomen Sonden (3), wobei die Sonden (3) jeweils Sensoren (13; 12) zur Ermittlung zielrelevanter Daten und der genauen Position der jeweiligen Sonde (3) sowie eine Nachrichtenübermittlungseinrichtung (15) zur Übermittlung der gemessenen Daten an die Auswerteeinrichtung (6) enthalten,
- eine außerhalb des Zielgebietes (1) anordbare, mit einem Rechner (5) versehene stationäre Auswerteeinrichtung (6) über eine drahtlose Verbindung mit der jeweiligen Sonde (3) verbindbar ist,
- die Sonden (3) jeweils einen GPS- Sensor (12) mit Antenne zur genauen Positionsbestimmung der Sonde (3) beinhaltet, **dadurch gekennzeichnet, dass**
- die Sonden (3) jeweils einen akustischen Sensor (13) aufweisen, welcher nach einem Selbsttest der Sonde (3) empfangsbereit geschaltet wird, wobei,
- wenn das vom akustischen Sensor (3) empfangene Signal einer Schallquelle einen bestimmten Schwellwert überschreitet oder es einem anderen vorgegebenen spezifischen Kriterium genügt, von allen Sonden (3), die dieses Signal empfangen haben, ein entsprechender Signalwert in regelmäßigen zeitlichen Abständen zusammen mit der GPS- Position der jeweiligen Sonde (3) und einem präzisen GPS-Zeitstempel über einen Satelliten (4) an die Auswerteeinrichtung (6) gesendet wird, und dann
- die stationäre Auswerteeinrichtung (6) aufgrund der bekannten GPS- Positionen der Sonden (3) zur genauen Positionsbestimmung des Zieles (2) mehrere Peilgruppen (18, 19, 20) festlegt und aus den Messwerten der Sonden (3) die Fahrtrichtung und Geschwindigkeit des Zieles (2) bestimmt.

2. Aufklärungssystem nach Anspruch 1, **dadurch gekennzeichnet, dass** die Sonden (3) durch Abwurf in das Zielgebiet (1) verbringbar sind und sowohl eine Brems- als auch eine Aufrichtvorrichtung (8) umfasst.

3. Aufklärungssystem nach einem der Ansprüche 1 oder 2, **dadurch gekennzeichnet, dass** es sich bei der Nachrichtenübermittlungseinrichtung (15) um eine Satellitenfunkanlage handelt.

## Claims

1. Reconnaissance system for determining targets (2) and target movements, in particular vehicle movements, in a target region (1), having a multiplicity of autonomous probes (3) which can be deployed in the appropriate target region (1) and can be arranged distributed there, with the probes (3) each containing sensors (13; 12) for determining target-relevant data and the precise position of the respective probe (3), as well as a message transmission device (15) for transmitting the measured data to the evaluation device (6),
- a stationary evaluation device (6) which can be arranged outside the target region (1), and is provided with a computer (5), can be connected via a wire-free link to the respective probe (3),
- the probes (3) each contain a GPS sensor (12) with an antenna for accurately positioning the probe (3), **characterized in that**
- the probes (3) each have an acoustic sensor (13) which is switched to be ready to receive after a self-test of the probe (3), in which case
- when the signal received by the acoustic sensor (3) from a sound source is above a specific threshold value or it satisfies some other predetermined specific criterion, from all of the probes (3) which have received this signal, a corresponding signal value is sent at regular time intervals together with the GPS position of the respective probe (3) and a precise GPS time stamp via a satellite (4) to the evaluation device (6), and then
- the stationary evaluation device (6) uses the known GPS positions of the probes (3) for accurate positioning of the target (2) to define a plurality of bearing groups (18, 19, 20), and uses the measured values from the probes (3) to define the direction of travel and the speed of the target (2).

2. Reconnaissance system according to Claim 1, **characterized in that** the probes (3) can be deployed by ejecting them into the target region (1), and have both a braking and an erection apparatus (8).

3. Reconnaissance system according to one of Claims 1 or 2, **characterized in that** the message transmission device (15) is a satellite radio system.

## Revendications

1. Système de reconnaissance pour la détection de cibles (2) et de mouvements des cibles, en particulier des déplacements de véhicules dans une zone de cible (1), comprenant une diversité de sondes (3) autonomes pouvant être insérées dans la zone de cible (1) correspondante et pouvant y être placées de manière répartie, moyennant quoi les sondes (3) contiennent respectivement des capteurs (13, 12) permettant de transmettre les données liées à la cible ainsi que la position exacte de chaque capteur (3) et un dispositif de communication des informations (15) permettant de transférer les données mesurées au dispositif d'évaluation (6),
- moyennant quoi un dispositif d'évaluation (6) stationnaire pouvant être placé à l'extérieur de la zone de cible (1) et équipé d'un ordinateur (5) peut être connecté via une connexion sans fil à chaque sonde (3),
- moyennant quoi les sondes (3) comporte respectivement un capteur GPS (12) avec antenne pour déterminer la position exacte de la sonde (3),
**caractérisé en ce que**
- les sondes (3) présentent respectivement un capteur sonore (13), lequel est mis sous tension en mode réception après un test automatique de la sonde (3), moyennant quoi,
- si le signal d'une source sonore reçu par le capteur sonore (3) dépasse une valeur d'onde précise ou qu'il répond à un autre critère spécifique préalablement indiqué, une valeur de signal correspondante est envoyée à des intervalles de temps réguliers, conjointement avec la position du GPS de chaque sonde (3) et un horodateur, par toutes les sondes (3) qui ont reçu ce signal au dispositif d'évaluation (6) via un satellite (4)
- et le dispositif d'évaluation stationnaire (6) définit plusieurs groupes de radars de repérage (18, 19, 20) en fonction des positions GPS des sondes (3) afin de déterminer la position exacte de la cible (2) et détermine, à partir des valeurs mesurées des sondes (3) le sens de déplacement et la vitesse de la cible (2).

2. Système de reconnaissance selon la revendication 1, **caractérisé en ce que** les sondes (3) peuvent être insérées par déblocage dans la zone de la cible (1) et comprend aussi bien un dispositif de freinage que de montée (8).

3. Système de reconnaissance selon l'une quelconques des revendications 1 ou 2, **caractérisé en ce qu'**il s'agit, pour le dispositif de communication des informations (15), d'une installation de radio par satellite.
